# EUROPEAN PATENT APPLICATION

(11) **EP 1 411 676 A1**
(43) Date of publication of application: **21.04.2004**
(21) Application number: 02360284.0
(22) Date of filing: 17.10.2002
(51) Int. Cl.: H04L 12/46, H04L 12/24

(54) **Method, network access server, client and computer software product for dynamic definition of layer 2 tunneling connections**

(71) Applicant: ALCATEL, 75008 Paris (FR)
(72) Inventor: Kennis, Paul, 2610 Wilrijk (BE); Van Ackere, Michel, 9100 Sint-Niklaas (BE)
(74) Representative: Brose, Gerhard, Dipl.-Ing.

(57) **Abstract**

The present invention relates to network access connectivity and layer 2 tunneling protocols. More particularly, the present invention relates to a method for dynamic definition of layer 2 tunneling connections comprising the steps of requiring a layer 2 tunneled connection, deducing and specifying the peers of the tunnel, and configuring and creating a layer 2 tunnel between the deduced peers. Further it relates to a layer 2 tunneling control service (L2TP_CON), a network access server (AS_0, AS_1, AS_2, AS_3), a L2TP client device (TERM, AS_0, AS_1, AS_2, AS_3), L2TP Requesting Device (TERM), and Computer Software Products.

## Description

### BACKGROUND OF THE INVENTION

### Field of the Invention

The present invention relates to network access connectivity and Layer 2 tunneling protocol.
More particularly, the present invention relates to a method, a network access server, a client and computer software products for dynamic definition of layer 2 tunneling connections.

### Background

The Remote Authentication Dial-In User Service (RADIUS) protocol was developed as an access server authentication and accounting protocol.

Communication between a network access server (NAS) and a RADIUS server is based on the User Datagram Protocol (UDP). Generally, RADIUS is considered as a connectionless service. Issues related to server availability, retransmission, and timeouts are handled by the RADIUS-enabled devices rather than the transmission protocol.

RADIUS is client/server based. The RADIUS client passes user information to designated RADIUS servers, and acts on the response that is returned. RADIUS servers receive access request messages, authenticate the user, and then return in the corresponding access accept messages the configuration information necessary for the client to deliver service to the user. A RADIUS server can act as a proxy client to other RADIUS servers or other kinds of authentication servers.

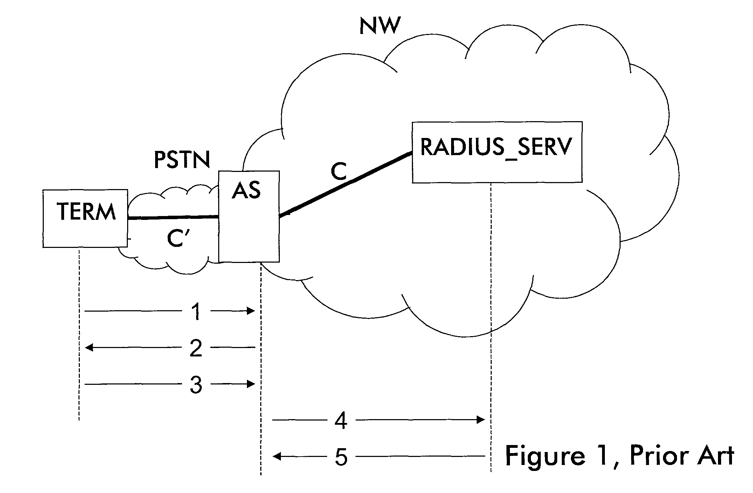

Prior art figure 1 shows the interaction between a dial-in user and the RADIUS client and server. It shows a client TERM connected via a network access server AS to a RADIUS server RADIUS_SERV using a connection C in network NW and a connection C' in an access network PSTN, e.g. a subscriber line. This network is not necessarily a public switched telecommunication or telephone network. The arrows indicating the following interactions 1, 2, 3, 4, and 5. At the first interaction 1 a client TERM initiates a point-to-point protocol (PPP) configuration request to the network access server AS. The second interaction 2 is that the network access server AS prompts for username and password or challenge. In the third interaction 3 the client TERM replies. The fourth interaction 4 comprises that the RADIUS client, now the network access server AS, sends username and encrypted password to the RADIUS server RADIUS_SERV. In the fifth interaction 5 the RADIUS server responds with accept, reject, or challenge. And the last action to be performed is that the RADIUS client acts upon services and service parameters bundled with accept or reject.

### Authentication and Authorization

The RADIUS server can support a variety of methods to authenticate a user. Typically, a user login consists of a query (Access-Request) from the NAS to the RADIUS server and a corresponding response (Access-Accept or Access-Reject) from the server. The Access-Request contains the username, encrypted password, NAS IP address, and port. The format of the request also provides information about the type of session that the user wants to initiate. For example, if the query is presented in character mode, the inference is "Service-Type = Exec-User," but if the request is presented in PPP packet mode, the inference is "Service Type = Framed User" and "Framed Type = PPP."

When the RADIUS server receives the Access-Request from a NAS, it searches a database for the username listed. If the username does not exist in the database, either a default profile is loaded or the RADIUS server immediately sends an Access-Reject message. This Access-Reject message can be accompanied by a text message indicating the reason for the refusal.

In RADIUS, authentication and authorization are coupled together. If the username is found and the password is correct, the RADIUS server returns an Access-Accept response, including a list of attribute-value pairs that describe the parameters to be used for this session. Typical parameters include service type (shell or framed), protocol type, IP address to assign the user (static or dynamic), access list to apply, or a static route to install in the NAS routing table. The configuration information in the RADIUS server defines what will be installed on the NAS.

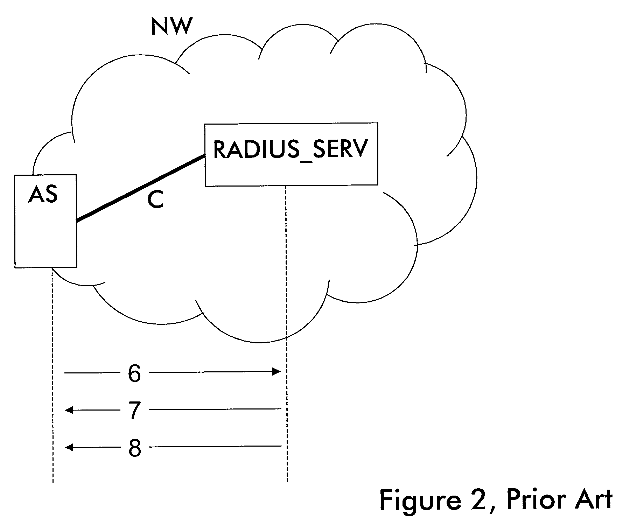

Prior art figure 2 illustrates the RADIUS authentication and authorization message sequence. A NAS AS communicates via a connection C within a network NW with a RADIUS server RADIUS_SERV, where the communication comprises three further interactions 6, 7, and 8. The first further interaction 6 is that the NAS AS informs the RADIUS server RADIUS_SERV about Packet Type - Access Request, User name, Password, etc. The RADIUS server RADIUS_SERV replies in the second further interaction 7 with Access-Accept/Access-Reject, User service, Framed Protocol, etc. The RADIUS server RADIUS_SERV might even reply optionally in a third further interaction 8 an Access Challenge, Reply message etc.

Transactions between the RADIUS client and RADIUS server are authenticated through the use of a shared secret, which is never sent over the network. In addition, user passwords are sent encrypted between the RADIUS client and RADIUS server to eliminate the possibility that someone snooping on an insecure network could determine a user's password.

### Accounting

The accounting features of the RADIUS protocol can be used independently of RADIUS authentication or authorization. The RADIUS accounting functions allow data to be sent at the start and end of sessions, indicating the amount of resources (such as time, packets, bytes, and so on) used during the session. An Internet service provider (ISP) might use RADIUS access control and accounting software to meet special security and billing needs.

### Layer Two Tunneling Protocol

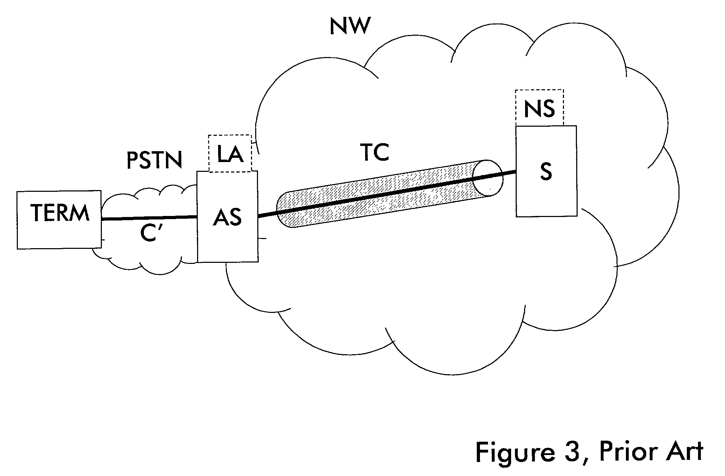

Prior art figure 3 illustrates Layer Two Tunneling Protocol (L2TP). The two main components that make up L2TP are the L2TP Access Concentrator (LAC), which is the role of the device that physically terminates a connection and the L2TP Network Server (LNS), which is the role of the device that terminates and possibly authenticates the PPP stream.

Prior art figure 3 depicts a typical wholesale dial model. It shows an L2TP access server AS in the role of an LAC shown by a first dashed rectangle LA and another network server NS in the role of an LNS shown by a second dashed rectangle NS. A physical call through a telecommunication network PSTN along a subscriber line C' is terminated on the LAC AS while the PPP session is forwarded to the LNS NS over a tunneled network connection TC in a network NW.

L2TP uses packet-switched network connections to make it possible for the endpoints to be located on different machines. The user has an L2 connection to an LAC, which then tunnels individual PPP frames to the LNS, so that the packets can be processed separately from the location of the circuit termination. The term "local" depends on the point-of-view that one take, e.g. for the initiator of the L2 connection, the LNS will be a remote NAS.

An LAC can be a NAS connected to the public switched telecommunication network. The LAC need only implement media for operation over L2TP. An LAC can connect to the LNS using a local-area network or wide-area network such as public or private Frame Relay.

LNS are often routers connected to a local-area network or wide-area network, such as public or private Frame Relay. It is the server side of the L2TP protocol and must operate on any platform that terminates PPP sessions.

Many different scenarios apply to the L2TP model. L2TP facilitates the tunneling of PPP packets across an intervening network in a way that is as transparent as possible to both end-users and applications.

PPP defines an encapsulation mechanism for transporting Multi-protocol packets across layer 2 (L2) point-to-point links. Typically, a user obtains an L2 connection to a NAS using one of a number of techniques, e.g. dialup POTS, ISDN, ADSL, etc. and then runs PPP over that connection. In such a configuration, the L2 termination point and PPP session endpoint reside on the same physical device.

L2TP extends the PPP model by allowing the L2 and PPP endpoints to reside on different devices interconnected by a packet-switched network. With L2TP, a user has an L2 connection to an access concentrator, e.g., modem bank, ADSL DSLAM, etc., and the concentrator then tunnels individual PPP frames to a NAS. This allows the actual processing of PPP packets to be divorced from the termination of the L2 circuit.

L2TP also solves the so called "multi-link hunt-group splitting problem". Multi-link PPP requires that all channels composing a multi-link bundle be grouped at a single NAS. Due to its ability to project a PPP session to a location other than the point at which it was physically received, L2TP can be used to make all channels terminate at a single NAS. This allows multi-link operation even when the calls are spread across distinct physical NASs.

A control connection operates in-band over a tunnel to control the establishment, release, and maintenance of sessions and of the tunnel itself. Control messages are exchanged between LAC and LNS pairs, operating in-band within the tunnel protocol. Control messages govern aspects of the tunnel and sessions within the tunnel.

### Terminology

An **L2TP Access Concentrator (LAC)** is a node that acts as one side of an L2TP tunnel and is a peer to the L2TP Network Server (LNS). The LAC sits between an LNS and a remote system and forwards packets to and from each. Packets sent from the LAC to the LNS require tunneling with the L2TP protocol.

An **L2TP Network Server (LNS)** is a node that acts as one side of an L2TP tunnel and is a peer to the L2TP Access Concentrator (LAC). The LNS is the logical termination point of a PPP session that is being tunneled from the remote system by the LAC.

A **Network Access Server (NAS)** is a device providing local network access to users across a remote access network such as the PSTN. An NAS may also serve as an LAC, LNS or both.

A **peer** in L2TP context refers to either the LAC or LNS. An LAC's peer is an LNS and vice versa. When used in context with PPP, a peer is either side of the PPP connection.

**L2TP** is connection-oriented protocol. The LNS and LAC maintain state for each call that is initiated or answered by an LAC. An L2TP session is created between the LAC and LNS when an end-to-end PPP connection is established between a remote system and the LNS. Datagrams related to the PPP connection are sent over the tunnel between the LAC and LNS.

A **Tunnel** exists between an LAC-LNS pair. The tunnel consists of a control connection and zero or more L2TP sessions. The tunnel carries encapsulated PPP datagrams and control messages between the LAC and the LNS.

The usual use of L2TP is as follows: The Remote System initiates a PPP connection across the PSTN Cloud to an LAC. The LAC then tunnels the PPP connection across the Internet, ATM etc. cloud to an LNS whereby access to a home LAN is obtained. The remote system provided addresses from a home local area network (LAN) via PPP network control protocol negotiation. Authentication, authorization and accounting may be provided by the home LAN's management domain as if the user were connected to a NAS directly. An LAC client may also participate in tunneling to the home LAN without use of a separate LAC. In this case, the host containing the LAC client software already has a connection to the public Internet. A "virtual" PPP connection is then created and the local L2TP LAC client software creates a tunnel to the LNS. As in the above case, addressing, authentication, authorization, and accounting will be provided by the home LAN's management domain.

### Protocol Overview

L2TP utilizes two types of messages, control messages and data messages. Control messages are used in the establishment, maintenance, and clearing of tunnels and calls. Data messages are used to encapsulate PPP frames being carried over the tunnel. Control messages utilize a reliable Control Channel within L2TP to guarantee delivery. The necessary setup for tunneling a PPP session with L2TP consists of two steps, establishing the control connection for a tunnel, and establishing a session as triggered by an incoming or outgoing call request.

The tunnel and corresponding control connection must be established before an incoming or outgoing call is initiated. An L2TP session must be established before L2TP can begin to tunnel PPP frames. Multiple sessions may exist across a single tunnel and multiple tunnels may exist between the same LAC and LNS.

Under current circumstances, when an L2TP tunnel has to be set up via an NAS, all the possible end-points for that tunnel have to be pre-populated in the NAS. The connection policy that handles the connection even has to have the correct LNS already defined.

Defining all the possible end-points of L2TP tunnels in the NAS can be very cumbersome, certainly when it should be possible to initiate a tunneled connection from a user's terminal client. The proposed solution will remove the precondition for pre-populating all the possible end-points by making it possible to dynamically make end-points for L2TP tunneling.

### BRIEF DESCRIPTION OF THE INVENTION

The necessity defining an L2TP tunnel is neither handled by the user or a user client, nor by a NAS configuration. Instead a specific Layer 2 tunneling control service in or behind the NAS deduces that for a connection set-up request an L2TP tunnel is necessary. It triggers the NAS dynamically defining and set up of an L2TP tunnel, i.e. configuring the peers on the fly.

This procedure might be implemented by retrieving a set of RADIUS attributes that specify source and destination of an L2TP tunnel, i.e. LAC and LNS that has to be used. E.g. after the authentication step, the layer 2 tunneling control service forces a NAS or in general the peers, setting up an L2TP tunnel as specified in the triggering RADIUS reply message.

A crucial piece of the invention is a layer 2 tunneling control service comprising a decision logic that will actually deduce the peers. When a user sends an L2TP tunnel request to a NAS, the authentication request is sent to a responsible authentication server, e.g. indicated by the IP address of the LNS. However, the layer 2 tunneling control service associated with the authentication server has the capability to decide that the peers for the tunnel have to be changed. This has consequences on the configuration for both end-points of the tunnel: In the originating peer the endpoint of the tunnel, i.e. the LNS has to be configured and in the destination peer the starting point of the tunnel, i.e. the LAC has to be configured.

The layer 2 tunneling control service is realized by a piece of software running on a server adapting and injecting a sequence of events in the NAS. Note that no Radius or L2TP parameters have to be changed to get this to work. That means the prior art method can be reused.

### OBJECTS AND ADVANTAGES OF THE INVENTION

The invention is a **Method** for dynamic definition of layer 2 tunneling connections comprising the steps of requesting a layer 2 tunneled connection from a layer 2 tunneling control service element by a terminal client, deducing and specifying the peers of the tunnel (identifying the layer 2 tunneling access concentrator and the layer 2 tunneling network server) by said layer 2 tunneling control service element, and configuring the deduced pears by said layer 2 tunneling control service element, and creating a layer 2 tunnel between the deduced peers. Said deducing might be dependent on the availability of infra structure and/or accounting information. Said deducing might further be stored on a data base. Said database might be a RADIUS service.

The invention is a **Layer 2 Tunneling Control Service Element** for dynamic definition for layer 2 tunneling comprising receiving means for receiving a layer 2 tunneled connection request, evaluation means a layer 2 tunneled connection request, deduction means for identifying suitable layer 2 tunneling peers, configuring means for configuring the layer 2 tunneling peers, and execution means for initiating the configured layer 2 tunneling. Said deduction means might comprising discovery means for retrieving infra structure and/or accounting information. Said discovery means might be RADIUS service.

The invention is a **Network Access Server** for dynamic definition for layer 2 tunneling comprising tunneling means providing a layer 2 tunneled connection, where said tunnel is defined by processing means for processing a layer 2 tunneled connection request invoking a layer 2 tunneling control service element. The Network Access Server might comprising said layer 2 tunneling control service element.

The invention is a **L2TP Client Device** for dynamic definition for layer 2 tunneling comprising configuration mean for specifying a layer 2 tunnel configuration and tunneling means providing a layer 2 tunneled connection, where said layer 2 tunnel configuration is controlled by a control means for replacing a deduced definition a layer 2 tunneling peer. Said deduced definition might be originated by a layer 2 tunneling service element.

The invention is a **L2TP Requesting Device** for dynamic definition for layer 2 tunneling comprising tunneling means using a layer 2 tunneled connection, requesting means for invoking a layer 2 tunneled connection, where said client further comprising control means for replacing a deduced definition a layer 2 tunneling peer.

The invention is a **Computer Software Product** for dynamic definition for layer 2 tunneling realizing a layer 2 tunneling control service element, and a **Computer Software Product** for dynamic definition for layer 2 tunneling enabling an L2TP requesting device replacing a deduced definition a layer 2 tunneling peer, as well as a **Computer Software Product** for dynamic definition for layer 2 tunneling enabling an L2TP client device replacing a definition of a layer 2 tunneling peer.

Accordingly, it is an object and advantage of the present invention to provide an L2TP connection without need to pre-populate or pre-configuring every conceivable L2TP tunnel definition in e.g. a network access server. Instead a layer 2 tunneling control service actually retrieves the definition information from a database, which might be part of a RADIUS server, and initiates correspondingly a tunneled connection.

Another advantage of the present invention is the ease of use of configuring the access equipment and to be enabled defining on the fly L2TP connections.

These and many other objects and advantages of the present invention will become apparent to those of ordinary skill in the art from a consideration of the drawings and ensuing description.

### BRIEF DESCRIPTION OF THE FIGURES

**Figure 1** is a schematic drawing showing the interaction between a dial-in user and the RADIUS client and server according to the prior art.
**Figure 2** is a schematic drawing illustrating the RADIUS authentication and authorization sequence according to the prior art.
**Figure 3** is a schematic drawing illustrating the Layer Two Tunneling Protocol (L2TP) according to the prior art.
**Figure 4, 5, 6** are schematic drawings of an evolving access network scenario, where successive an L2TP tunnel is dynamically established, according to the invention.
**Figure 7** is a schematic drawing illustrating the collaboration between access servers, layer 2 tunneling control service , and a client terminal, when a tunneled connection is defined, according to the invention.
**Figure 8** is a schematic drawing illustrating an iterated application of the invention.

### DETAILED DESCRIPTION OF THE INVENTION

Those of ordinary skill in the art will realize that the following description of the present invention is illustrative only and is not intended to be in any way limiting. Other embodiments of the invention will readily suggest themselves to such skilled persons from an examination of the within disclosure.

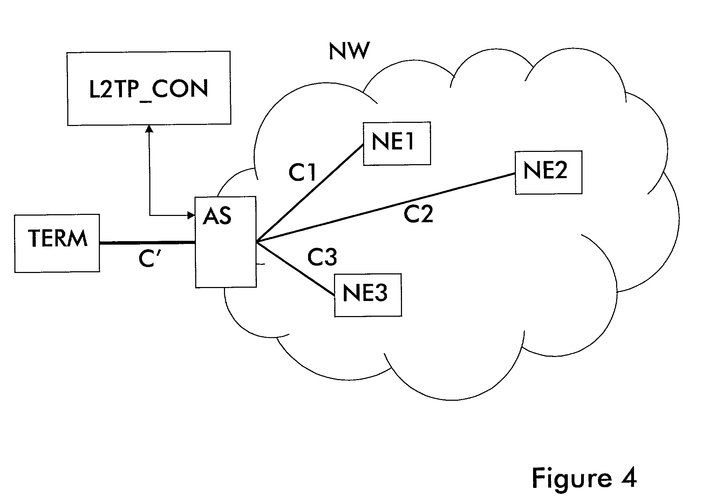

**Figures 4, 5, 6** are schematic drawings of an evolving access network scenario, where according to the invention, successive an L2TP tunnel is established.

Each of the figures 4, 5, and 6 shows a Terminal TERM initially in the role of a client device, a network access server AS and three network elements NE1, NE2, and NE3 in a network NW. Such network elements NE1, NE2, NE3 might be application servers, routers, etc. The network access server has an associated layer 2 tunneling control service L2TP_CON managing L2TP tunnel definitions. The network elements NE1, NE2, NE3 are interconnected with the network access server AS by connections C1, C2, C3 respectively. The terminal TERM is also interconnected by a connection C' with the network access server AS.

The shown configuration allows the terminal TERM to connect to each network element NE1, NE2, NE3 via the network access server AS. When the terminal requesting a tunnel from the network access server AS the layer 2 tunneling control service L2TP_CON gets involved.

For the moment suppose that the terminal requested the network access server AS establishing a tunnel between the network access server AS and a first network element NE1. This requires that the network access server AS has to be configured as an LAC, and the first network element NE1 has to be configured as an LNS for the tunnel between them.

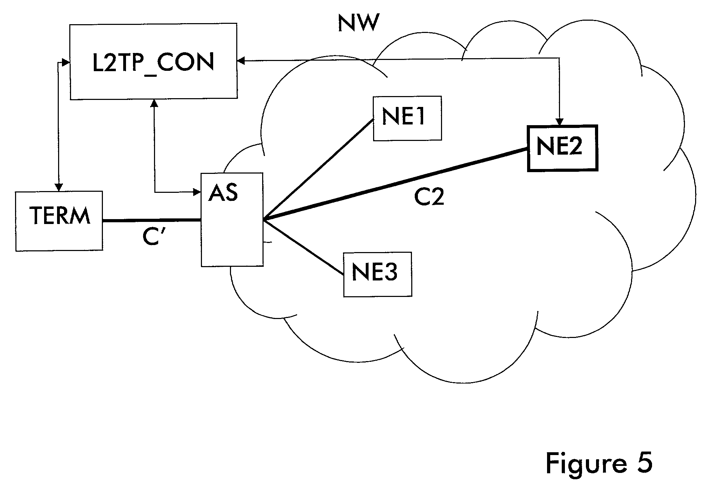

**Figures 5** shows the connection C2 between the network application server NA and a second network element NE2 emphasized as well as the network element NE2 itself emphasized to illustrate that the connection C2 and the second network element NE2 is chosen to be tunneled using L2TP.

How could this scenario arise from the one shown in figure 4? The network access server AS involved the layer 2 tunneling control service L2TP_CON for defining the initially requested connection between the network access server AS and the first network element NE1. The layer 2 tunneling control service deduced depending e.g. on the accounting information that the required tunnel is between the network access server AS and the second network element NE2, yielding the scenario shown in figure 5. The drawing illustrates how the layer 2 tunneling control service L2TP_CON controls the choice of the peers of the not yet established tunnel, indicated by the arrows.

The core of the scenario is the action of the layer 2 tunneling control service L2TP_CON. When the network access server AS involves the layer 2 tunneling control service L2TP_CON it has to determine LAC(s) and LNS(s). The choice might be based e.g. on the request as well as on the user and accounting information, or it might be time dependent or derived from an information system, e.g. a network information system like a network management system or a RADIUS server.

Furthermore, the configuration is to be assumed as completely new, i.e. the LNS and the LAC are newly introduced and are previously unknown by any participating device. Hence the LNS and the LAC need not to be configured in advance.

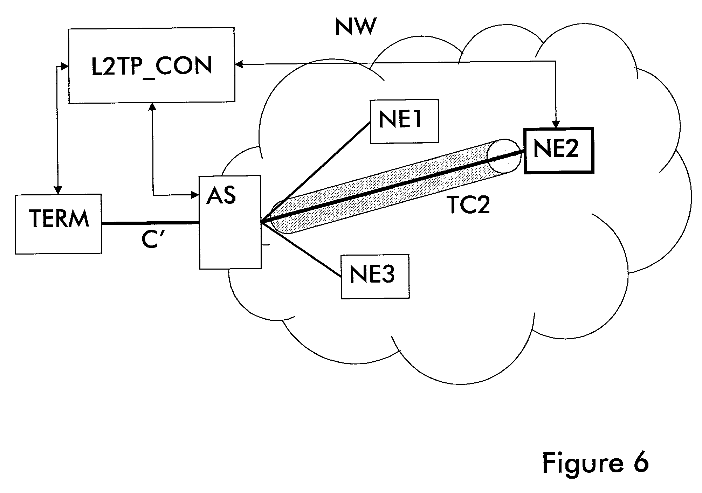

**Figures 6** shows the chosen connection C2 now to be a tunneled connection TC2 connecting the network application server AS and the second network element NE2 using L2TP.

At that moment the choice the network access server NAS plays an LAC and the network element NE2 plays the corresponding LNS. The former choice is dynamically implemented as an L2TP connection forced by the layer 2 tunneling control service L2TP_CON.

How could this happen? The network element NE2 as well as the network access server need to be respectively configured as an LAC and an LNS. The layer 2 tunneling control service L2TP_CON retrieved and derived the necessary configuration information by e.g. involving a network information system like RADIUS. In a second step the layer 2 tunneling control service L2TP_CON has to force the tunnel definition, i.e. it has to configure the devices playing the LNS(s) and LAC(s).

In the example the network access server AS is configured to be an LAC of the second network element NE2, and the network element NE2 is to be configured as an LNS for the network access server AS. The terminal TERM has to be notices about choosing the second network element NE2 instead of the first network element NE1 and the establishment of the tunnel TC2.

Sequentially the figures 4,5,6 illustrates how it is made possible by the invention defining, determining, and creating an L2TP connection on the fly.

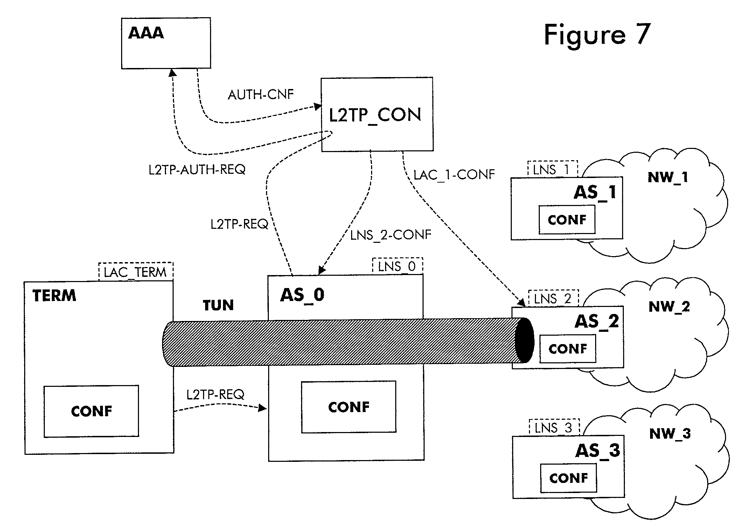

**Figure 7** shows a collaboration scenario with a terminal TERM, four access servers AS_0, AS_1, AS_2, AS_3, an authentication-authorization-and-accounting server AAA, and a layer 2 tunneling control service L2TP_CON. Each access server and the terminal comprise a configuration file CONF. In the case of the terminal TERM the configuration file CONF will contain a profile for an L2TP tunnel set-up from, e.g. the terminal TERM playing a local access concentrator LAC_TERM to an initial access server AS_0 playing a initial L2TP network server LNS_0. Access server AS_1 is related to a network NW_1, access server AC_2 is related to a network NW_2 and access server AS_3 is related to a network NW_3. The terminal is connected via a tunnel TUN with access server AS_2.

The figure shows further the exchanged messages between these components for establishing the tunnel TUN using dashed arrows. The first message is the L2TP-REQ, containing e.g. a user and password combination, originated by the terminal TERM and received by the initial access server AS_0, the second message is L2TP-AUTH-REQ, comprising e.g. the a user and password combination, originated by the initial access server AS_0 and further forwarded by the layer 2 tunneling control service DEC-LOGIC to the authentication-authorization-and-accounting server AAA. The authentication-authorization-and-accounting server AAA reacts with a message AUTH-CNF (accept or reject) to the layer 2 tunneling control service L2TP_CON, and the layer 2 tunneling control service L2TP_CON deduces on the correct access server AS_2 and originates a configuration message LNS-CONF to the initial access server AS_0, and a configuration message LAC-CONF to the correct access server AS_2.

The terminal TERM and the access servers AS_0, AS_1, AS_2, AS_3 can play the role of an LNS or an LAC, indicated by the labels in the above dashed rectangle. In the scenario there is a static role allocation; the terminal is in the role of an LAC LAC_TERM, and the access servers are in the role of LNSs; the access server AS_0 in the LNS role LNS_0, and the access server AS_1 in an LNS role LNS_1, the access server AS_2 in an LNS role LNS_2, and the access server AS_3 in an LNS role LNS_3, respectively.

The tunnel establishing procedure is as follows. The access servers AS_0, AS_1, AS_2, AS_3 have no pre-configured configurations. The terminal TERM, e.g. a personal computer, has a configuration containing an L2TP profile specifying itself as an LAC (LAC_TERM) and an (initial) tunnel destination LNS LNS_0. When connecting, the terminal requests with said first message L2TP-REQ a tunnel connection between itself and the initial access server AS_0. The layer 2 tunneling control service derives based on the user information and on the L2TP request that the correct LNS would be the access server AS_2, i.e. the LNS role LNS_2.
The deduction performed by the layer 2 tunneling control service L2TP_CON might be realized by a certain inference mechanism, e.g. a set of rule for deriving tunnel configurations e.g. based on accounting information like past logins, connections, network descriptions, service or server availability, devices and device configurations, etc. The decision about a tunnel might even time dependent.

Now the layer 2 tunneling control service instructs via configuration message LNS-CONF the initial access server AS_0 to insert LNS_2 as the LNS for the tunnel, and via another configuration message LAC-CONF to the access server AS_2 to insert the profile of the LAC LAC_TERM into its configuration. After these messages the initial access server AS_0 completes the setup of the tunnel TUN between the LAC LAC_TERM and the LNS LNS_2.

The configuration forced by the layer 2 tunneling control service L2TP_CON might be realized using or enhancing network information systems like RADIUS. The crucial point is that the layer 2 tunneling control service L2TP_CON needs to be aware about possible network configurations. An analogous awareness requirement arises in the context of network access scenarios where e.g. the awareness about connection is ensured by e.g. a RADIUS server.

As a result of the described procedure a dedicated L2TP tunnel TUN is dynamically set up between the network elements playing the LAC role LAC_TERM and the LNS role LNS_2, without both of them a priory knowing about each other's existence. Comparing this with prior art, earlier the profiles for all LACs have to be pre-configured in the configuration files CONF in all possible tunnel endpoint LNSs, profiles for all LNSs have to be pre-configured in the configuration files CONF in the initial LNS and profiles for all LNSs have to be pre-configured in the CONF configuration files in the initial LACs (LAC_TERM). Even the configuration for the correct LNS has to be selected in advance.

The invention solves the configuration deployment problem. The layer 2 tunneling control service L2TP_CON is even in the position to create new LAC and LNS configurations.

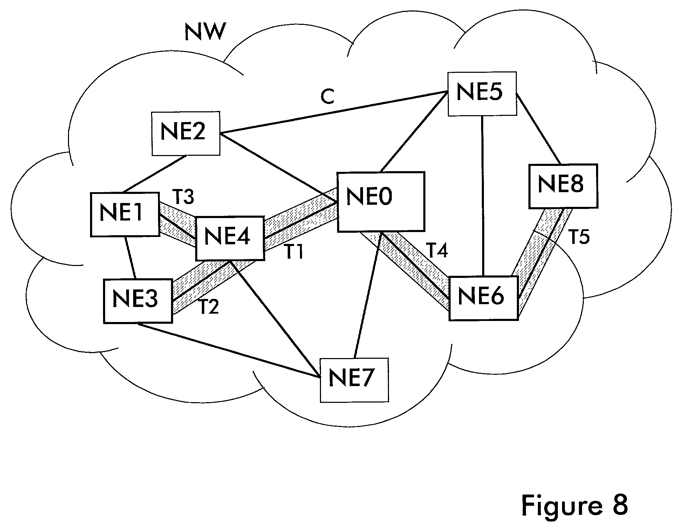

**Figure 8** shows the iterated application of the invention. Within a possibly heterogeneous network NW of network elements NE0, NE1, NE2, NE3, NE4, NE5, NE6, NE7, NE8 there are connections C. A dedicated network element NE0, can establish on the fly L2TP connections between arbitrary network elements. The figure shows fife L2TP connections T1, T2, T3, T4, T5.

### Alternative Embodiments

Although illustrative presently preferred embodiments and applications of this invention are shown and described herein, many variations and modifications are possible which remain within the concept, scope, and spirit of the invention, and these variations would become clear to those of skill in the art after perusal of this application.

Obviously the invention can be used with any type of private connections beside L2TP connections using any cryptology protocol based on, e.g. on RSA (R.L. Rivest, A. Shamir, L. Adleman) or DES (Decryption Encryption Standard). The protocol might even not a point-to-point-protocol. The novel feature is the definition and configuration of any participating instances on the fly.

Alternatively the Invention can be generalized to enable clients in any network to establish a virtual private network on the fly by specifying the participants, only, and requesting a clique as connection graph. Allowing to participate in such a network might be managed by a service handling with public key and each new participant might have to authenticate itself.

## Claims

1. A **Method** for dynamic definition of layer 2 tunneling connections (TC, TUN, T1, ..., T5) comprising the steps of
- requesting (L2TP-REQ) a layer 2 tunneled connection (TC, TUN) from a layer 2 tunneling control service element (L2TP_CON) by a terminal client (TERM),
- deducing and specifying the peers (AS, TERM, AS_0, AS_1, AS_2, AS_3) of the tunnel (identifying the layer 2 tunneling access concentrator and the layer 2 tunneling network server) by said layer 2 tunneling control service element (L2TP_CON), and
- configuring (LNS_2-CONF, LAC_1-CONF) the deduced peers (AS, TERM, AS_0, AS_1, AS_2, AS_3) by said layer 2 tunneling control service element (L2TP_CON),
- and creating a layer 2 tunnel (TC, TUN) between the deduced peers (TERM, AS_0, AS_2).

2. The **Method** according to claim 1, where said deducing is dependent on the availability of infra structure (AS_1, AS_2, AS_3) and/or accounting information (AAA).

3. The **Method** according to claim 1 where said deducing is stored on a data base.

4. The **Method** according to claim 3 where the data base is RADIUS service.

5. A **Layer 2 Tunneling Control Service Element** (L2TP_CON) for dynamic definition for layer 2 tunneling (TC, TUN, T1, ..., T5) comprising receiving means for receiving a layer 2 tunneled connection request (L2TP-REQ), evaluation means a layer 2 tunneled connection request (L2TP-REQ), deduction means for identifying suitable layer 2 tunneling peers(LNS_2-CONF, LAC_1-CONF), configuring means for configuring the layer 2 tunneling peers (L2TP_CON, LNS_0, LNS_1, LNS_2, LNS_3), and execution means for initiating the configured layer 2 tunneling (L2TP_CON, AS_0, AS_1, AS_2, AS_3).

6. The **Layer 2 Tunneling Control Service Element** (L2TP_CON) according to claim 5 where said deduction means comprising discovery means for retrieving infra structure and/or accounting information.

7. The **Layer 2 Tunneling Control Service Element** (L2TP_CON) according to claim 6 where said discovery means is RADIUS service.

8. A **Network Access Server** (AS, AS_0, AS_1, AS_2, AS_3) for dynamic definition for layer 2 tunneling comprising tunneling means providing a layer 2 tunneled connection, where said tunnel (TC, TUN, T1, ..., T5) is defined by processing means for processing a layer 2 tunneled connection request invoking a layer 2 tunneling control service element (L2TP_CON).

9. The **Network Access Server** (AS, AS_0, AS_1, AS_2, AS_3) according to claim 8 comprising said layer 2 tunneling control service element (L2TP_CON).

10. An **L2TP Client Device** (TERM, AS, AS_0, AS_1, AS_2, AS_3) for dynamic definition for layer 2 tunneling comprising configuration mean for specifying a layer 2 tunnel configuration and tunneling means providing a layer 2 tunneled connection (TC, TUN, T1, ..., T5), where said layer 2 tunnel configuration is controlled by a control means for replacing a deduced definition a layer 2 tunneling peer (TERM, AS, AS_0, AS_2).

11. The **L2TP Client Device** (TERM, AS, AS_0, AS_1, AS_2, AS_3, NE0, ..., NE10) according to claim 10 where said deduced definition is originated by a layer 2 tunneling service element (L2TP_CON).

12. An **L2TP Requesting Device** (TERM, AS, AS_0, AS_1, AS_2, AS_3, NE0, ..., NE10) for dynamic definition for layer 2 tunneling comprising tunneling means using a layer 2 tunneled connection, requesting means for invoking a layer 2 tunneled connection (TC, TUN, T1, ..., T5), where said client further comprising control means for replacing a deduced definition a layer 2 tunneling peer (TERM, AS, AS_0, AS_2).

13. A **Computer Software Product** for dynamic definition for layer 2 tunneling realizing a layer 2 tunneling control service element (L2TP_CON).

14. A **Computer Software Product** for dynamic definition for layer 2 tunneling enabling an L2TP requesting device replacing a deduced definition a layer 2 tunneling peer (TERM, AS, AS_0, AS_2).

15. A **Computer Software Product** for dynamic definition for layer 2 tunneling enabling an L2TP client device replacing a definition of a layer 2 tunneling peer (TERM, AS, AS_0, AS_2).
